# EUROPÄISCHE PATENTSCHRIFT

(11) **EP 2 238 190 B1**
(45) Veröffentlichungstag und Bekanntmachung des Hinweises auf die Patenterteilung: **28.08.2013**
(21) Anmeldenummer: 09706382.0
(22) Anmeldetag: 29.01.2009
(51) Int. Cl.: C08G 18/42, C08G 18/73, A61L 31/14

(54) **VERFAHREN ZUR PROGRAMMIERUNG EINES FORMGEDÄCHTNISPOLYMERS UNTER FESTLEGUNG DER SCHALTTEMPERATUR DURCH WAHL DER PROGRAMMIERUNGSTEMPERATUR**
METHOD FOR PROGRAMMING A SHAPE MEMORY POLYMER WHILE DEFINING THE SWITCH TEMPERATURE BY SELECTION OF THE PROGRAMMING TEMPERATURE
PROCÉDÉ DE PROGRAMMATION D'UN POLYMÈRE À MÉMOIRE DE FORME EN DÉFINISSANT LA TEMPÉRATURE DE DÉCLENCHEMENT PAR LE CHOIX DE LA TEMPÉRATURE DE PROGRAMMATION

(30) Priorität: 30.01.2008 DE 102008007362
(43) Veröffentlichungstag der Anmeldung: 13.10.2010
(73) Patentinhaber: Helmholtz-Zentrum Geesthacht Zentrum für Material- und Küstenforschung GmbH, 21502 Geesthacht (DE)
(72) Erfinder: KRATZ, Karl, 14615 Berlin (DE); LENDLEIN, Andreas, 14167 Berlin (DE); VOIGT, Ulrike, 22303 Hamburg (DE); WAGERMAIER, Wolfgang, 14471 Potsdam (DE)
(74) Vertreter: Gulde Hengelhaupt Ziebig & Schneider
(86) Internationale Anmeldenummer: PCT/EP2009/050992
(87) Internationale Veröffentlichungsnummer: WO 2009/095434

(56) Entgegenhaltungen:
- WO-A-2006/086011
- R. MOHR ET AL.: "Initiation of shape-memory effect by inductive heating of magnetic nanoparticles in thermoplastic polymers" PNAS, Bd. 103, Nr. 10, 7. März 2006 (2006-03-07), Seiten 3540-3545, XP002525755 in der Anmeldung erwähnt
- P. MIAUDET ET AL.: "Shape and Temperature Memory of Nanocomposites with Broadened Glass Transition" SCIENCE, Bd. 318, 23. November 2007 (2007-11-23), Seiten 1294-1296, XP002525756 in der Anmeldung erwähnt
- C. M. YAKACKI ET AL.: "Unconstrained recovery characterization of shape-memory polymer networks for cardiovascular applications" BIOMATERIALS, Bd. 28, 2007, Seiten 2255-2263, XP002525757 in der Anmeldung erwähnt

## Beschreibung

Die Erfindung betrifft ein Verfahren zur Programmierung eines Formgedächtnispolymers, das mindestens ein Schaltsegment mit mindestens einem thermischen Phasenübergang sowie kovalente und/oder nicht-kovalente Vernetzungspunkte aufweist, so dass das Formgedächtnispolymer nach seiner Programmierung in der Lage ist, nach einer Temperatursteigerung auf eine Temperatur, die mindestens einer Schalttemperatur entspricht, von einer programmierten temporären Form in seine permanente Form überzugehen.

Formgedächtniskunststoffe (Shape-Memory-Polymere SMPs) besitzen die Fähigkeit, nach entsprechender thermomechanischer Behandlung zumindest eine definierte, temporär fixierte Form (A) einzunehmen und nach Erwärmung auf eine Materialtemperatur oberhalb der Schalttemperatur wieder in ihre ursprüngliche (permanente) Gestalt (B) zurückzukehren. Die Shape-Memory-Polymere, welche einen thermisch induzierten Formgedächtniseffekt zeigen, können sowohl kovalente Polymer-Netzwerke (z.B. Thermosets, Photosets), thermoplastische Elastomere (z.B. Multiblock Copolymere, Polyesterurethane) oder Blends (Polymer-Mischungen) und Komposite der vorgenannten Kunststoffklassen sein.

Formgedächtniskunststoffe sind auf molekularer Ebene aus zumindest einer Sorte Schaltsegmente zur Fixierung der temporären, programmierten Form (A) und Netzpunkten zur Stabilisierung der ursprünglichen permanenten Form (B) aufgebaut. Die Netzpunkte können dabei sowohl physikalischer Natur oder chemischer Natur (kovalente Vernetzungen) sein. Bei thermoplastischen Formgedächtniskunststoffen sind die Schaltsegmente über so genannte Hartsegmente miteinander verknüpft, wobei eine Überschreitung der Übergangstemperatur der Hartsegmente zu einem physikalischen Aufschmelzen und zu einem vollständigen Formverlust des Kunststoffs führt. Weist das Polymer zwei oder mehrere Sorten Schaltsegmente mit unterschiedlichen Schalttemperaturen auf, können theoretisch auch zwei oder mehrere temporäre Formen programmiert werden, die durch sukzessive Erwärmung sequentiell abrufbar sind, wobei es bislang jedoch nur gelang, zwei Formenübergänge, d.h. zwei temporäre Formen zu realisieren.

Die Einstellung der Schalttemperatur (T_{switch} bzw. T_{σ,max}) bei Formgedächtnispolymeren mit einem thermischen Formgedächtniseffekt und deren Kompositen erfordert bisher eine chemische Veränderung des Polymers, insbesondere des Schaltsegments, und einer damit verbundenen Änderung der Übergangstemperatur (Tₜᵣₐₙₛ) (z.B. Lendlein & Kelch, Angew. Chem. Int. Ed. Engl. 2002, 41, 2034-2057; Behl & Lendlein, Soft Matter 2007, 1, 58-67). Die Einstellung der Übergangstemperatur bei amorphen Schaltsegmenten mit einer Glasübergangstemperatur (Tₜᵣₐₙₛ = Tg) erfolgt beispielsweise durch Variation des Comonomerverhältnisses im Copolymer-Schaltsegment (Lin & Chen, J. Appl. Polym. Sci. 1998, 69, 1575-1586) oder durch Variation des Molekulargewichts des Schaltsegments (Lin & Chen, J. Appl. Polym. Sci. 1998, 69, 1563-1574; Takahashi et al., J. Appl. Polym. Sci. 1996, 60, 1061-1069; Choi & Lendlein, Soft Matter 2007, 3, 901-909). Bei teilkristallinen Schaltsegmenten mit einer Schmelztemperatur (Tₜᵣₐₙₛ = Tₘ) hingegen gelingt die Einstellung der Übergangs-temperatur beispielsweise für Poly-ε-caprolacton durch Variation des Molekulargewichts des Schaltsegments (z.B. Lendlein et al., J. Polym. Sci., Part A: Polym. Chem. 2005, 43,7, 1369-1381; Kim et al., Polymer 1996, 37, 5781-5793).

Nachteil der bisherigen Lösungen ist, dass jedem Schaltsegment eine feste Schalttemperatur zugeordnet ist und diese nur durch chemische Veränderung des Schaltsegments bzw. des Verhältnisses von Schaltsegment zu Hartsegment variiert werden kann, d.h. es muss ein neues Polymer synthetisiert werden. Wünschenswert wäre daher ein Verfahren, welches die Einstellungen unterschiedlicher Schalttemperaturen bei einer Art von Formgedächtniskunststoff oder Komposit erlaubt.

Lediglich bei einem Formgedächtnis-Kompositmaterial, das aus dem (selbst keine Formgedächtniseigenschaften aufweisenden) Polymer PVA und darin eingearbeitete Kohlenstofffasern (carbon nanotubes, CNT) besteht, konnte ein so genanntes Temperatur-gedächtnis nachgewiesen werden (Miaudet et al.: Science 318 (2007), 1294-1296). Das bedeutet, dass die Schalttemperatur, bei welcher der Übergang von der programmierten temporären Form in die permanente Form erfolgt, eine Abhängigkeit von der Programmierungstemperatur, bei welcher die Deformation erfolgt, zeigt. Insbesondere wurde eine Zunahme der Schalttemperatur mit steigenden Programmierungstemperaturen beobachtet. Für reine Formgedächtnispolymere wurde ein solcher Zusammenhang jedoch ausgeschlossen. Vielmehr wurde hier stets eine direkte Korrelation der Rückstellungstemperatur mit der thermodynamischen Übergangstemperatur Tₜᵣₐₙₛ festgestellt. Nachteilig an diesen Kompositmaterialien, die ihr Formgedächtnis nicht dem Polymer sondern den Partikeln bzw. Fasern verdanken, ist jedoch die Unschärfe der Rückstellungstemperatur, d.h. die Breite des Rückstellintervalls ΔT_{rec}, über welchem der Formenübergang erfolgt. Dies führt zu einem für viele Anwendungen unerwünschten Einsetzen der Rückstellung bereits bei Temperaturen deutlich unterhalb der Schalttemperatur. Daneben ist ein entsprechendes "temperature memory" Verhalten auch für metallische Formgedächtnislegierungen (SMA) beschrieben worden, welches über die Durchführung eines unvollständigen Programmierungszyklus eingestellt werden kann (Zheng et al.: Appl. Phys. Lett. 2004, 84, 31-33).

Der vorliegenden Erfindung liegt daher die Aufgabe zugrunde, ein Verfahren zur Programmierung eines Formgedächtnispolymers zur Verfügung zu stellen, welches die Einstellung unterschiedlicher, vorbestimmter Schalttemperaturen ohne Veränderung des chemischen oder physikalischen Aufbaus des Formgedächtnispolymers erlaubt.

Diese Aufgabe wird durch ein Verfahren zur Programmierung eines Formgedächtnispolymers oder seiner Komposite gelöst, wobei das Polymer mindestens ein Schaltsegment mit mindestens einem thermischen Phasenübergang sowie kovalente und/oder nicht-kovalente Vernetzungspunkte aufweist, so dass es nach seiner Programmierung in der Lage ist, nach einer Temperatursteigerung auf eine Temperatur, die mindestens seiner Schalttemperatur (T_{switch}, T_{σmax}) entspricht, von einer programmierten temporären Form in seine permanente Form überzugehen. Das erfindungsgemäße Programmierungsverfahren weist die Schritte auf:
(a) Vorbestimmung einer Programmierungstemperatur (T_{prog}) in Abhängigkeit von einer gewünschten Schalttemperatur (T_{switch}, T_{σmax}),
(b) Erwärmung des Formgedächtnispolymers auf die vorbestimmte Programmierungstemperatur (T_{prog}) und Überführung des Polymers in eine der temporären Form entsprechende Form durch Anwendung eines Formzwangs und
(c) Abkühlen des Polymers auf eine Temperatur unterhalb der gewünschten Schalttemperatur (T_{switch}, T_{σmax}) unter Aufrechterhaltung des Formzwangs.

Mit Hilfe des erfindungsgemäßen Verfahrens zur Programmierung eines "Temperaturgedächtnisses" ist es möglich, die Schalttemperatur eines beliebigen Formgedächtnispolymers (oder eines ein Formgedächtnispolymer enthaltenden Komposits mit Formgedächtniseigenschaften) ohne chemische Variation des Schaltsegmentes in gewissen Grenzen einzustellen. Basis der Erfindung ist eine thermomechanische Behandlung, bei der die Programmierungstemperatur (T_{prog}), d.h. die während der Programmierungsdeformation angewandte Temperatur, entsprechend einer angestrebten Schalttemperatur (T_{switch,} T_{σmax)} variiert wird. Auf diese Weise gelingt die Einstellung der Schalttemperatur von Formgedächtnispolymeren durch Einstellung des Schaltpunktes des Schaltsegments mittels gezielter Auswahl der Programmierungstemperatur.

Dabei wird im Rahmen der vorliegenden Erfindung unter Schalttemperatur die Rückstellungstemperatur verstanden, bei der der Formenübergang von der temporären Form in die permanente Form stattfindet. Erfolgt die Rückstellung lastfrei, dann ergibt sich die Schalttemperatur T_{switch} aus dem Wendepunkt der Dehnungs-Temperatur-Kurve. Im Falle einer Wiedererwärmung unter einer auferlegten Last, d.h. bei konstanter Form, entspricht die Schalttemperatur T_{σmax} dem Maximum der Spannungs-Temperatur-Kurve (s. Ausführungsbeispiele). Das erfindungsgemäße Verfahren ist nicht auf reine Formgedächtnispolymere beschränkt, sondern lässt sich auch auf Kompositmaterialien anwenden, die aus einem Formgedächtnispolymer oder einem Blend aus mehreren Formgedächtnispolymeren sowie in diesem verteilte Partikel bestehen. Dabei kann es sich bei den Partikeln insbesondere um magnetische Materialien handeln, die sich in einem magnetischen Wechselfeld erwärmen, oder um elektrisch leitfähige Materialien, die eine Joule-Erwärmung des Komposits erlauben.

Die wesentliche Innovation des beschriebenen Verfahrens zur Generierung eines Temperaturgedächtnisverhaltens von Formgedächtnispolymeren ist die Einführung eines neuen Parameters im Rahmen des Verfahrens zur Programmierung von Formgedächtniskunststoffen, nämlich der Programmierungstemperatur T_{prog}. Dies erlaubt die systematische Variation der Schalttemperatur im Bereich von mindestens 20 K, insbesondere von mindestens 30 K, typischerweise im Bereich von 50 K. Gegenüber dem in Miault et al. (s.o.) beschriebenen Formgedächtnis-Kompositen aus einem Polymer, das selbst kein Formgedächtnis aufweist, und darin eingearbeiteten Kohlenstoff-Nanotubes weisen die nach dem erfindungsgemäßen Verfharen programmierten Formgedächtnispolymere und deren Komposite ein wesentlich kleineres Rückstellintervall ΔT_{rec} auf und damit einen bezüglich der Temperatur deutlich stärker definierten Übergang auf, was für viele Anwendungen von Bedeutung ist. So konnte bei thermoplastischen Multiblockcopolymeren (s. Ausführungsbeispiel 1) ein Rückstellintervall ΔT_{rec} von etwa 40 K erhalten werden und für Multiphasen-Polymernetzwerke (s. Ausführungsbeispiel 6) von sogar nur etwa 15 K.

Mit Hilfe des hier beschriebenen Verfahrens zur Erzeugung eines Temperaturgedächtnisses ist es möglich, bei Formgedächtnispolymeren mit teilkristallinen oder amorphen Schaltsegmenten und deren Kompositen verschiedene Schalttemperaturen durch Variation der Temperatur während der Programmierung einzustellen. So kann beispielsweise ein Temperatur-Sensor (siehe auch Beispiel 2) in seinem Schaltbereich reprogrammiert werden, bzw. gelingt es mit einem Formgedächtnispolymer durch Wahl der Programmierungstemperatur unterschiedliche Schalttemperaturen eines Sensors zu realisieren.

Im Rahmen dieser Erfindung wird ein Verfahren vorgestellt, aus welchem eine neue, bislang nicht beschriebene Funktionalität von Formgedächtnispolymeren, das Temperaturgedächtnis resultiert. Das Temperaturgedächtnis beschreibt die Fähigkeit eines Formgedächtniskunststoffs, sich die Programmierungstemperatur zu "merken". Somit ist es erstmals möglich, die Einstellung der Schalttemperatur des Schaltsegments von Formgedächtniskunststoffen mittels Variation der Programmierungstemperatur einzustellen, ohne eine chemische Veränderung des Formgedächtnispolymers vorzunehmen.

Gemäß dem erfindungsgemäßen Verfahren erfolgt die Vorbestimmung der Programmierungstemperatur (T_{prog}) rechnerisch unter Anwendung eines empirisch ermittelten mathematischen Zusammenhangs zwischen der Programmierungstemperatur (T_{prog}) und der Schalttemperatur (T_{switch,} T_{σmax}). Hierfür wird für ein Formgedächtnispolymer gegebener Chemie eine Versuchsreihe durchgeführt, in der das Polymer bei unterschiedlichen Programmierungstemperaturen (die selbstverständlich im Bereich oder oberhalb der thermischen Phasenübergangstemperatur des Schaltsegments liegen müssen) programmiert wird und anschließend die Rückstellung durch Erwärmung des Polymers ausgelöst und die Schalttemperatur ermittelt wird. Der mathematische Zusammenhang zwischen Programmierungs- und Schalttemperatur kann dann etwa mittels eines manuellen oder automatischen Kurvenanpassungsverfahrens ermittelt werden. Die im Rahmen der vorliegenden Erfindung durchgeführten Experimente (s. Beispiele) deuten darauf hin, dass in der Regel ein im Wesentlichen linearer Zusammenhang zwischen Programmierungs- und Schalttemperatur besteht, so dass in den meisten Fällen die Ermittlung einer einfachen Linearfunktion ausreicht, um die Programmierungstemperatur in Abhängigkeit der gewünschten Schalttemperatur vorzubestimmen.

Alternativ erfolgt die Vorbestimmung der Programmierungstemperatur (T_{prog}) unter Verwendung eines empirisch ermittelten Kennfeldes, enthaltend Parameterpaare aus Programmierungstemperatur (T_{prog}) und Schalttemperatur (T_{switch}, T_{σmax}). Dabei wird wie vorstehend beschrieben eine Versuchsreihe durchgeführt und die ermittelten Schalttemperaturen den entsprechenden Programmierungstemperaturen zugeordnet und aus dem so ermittelten, insbesondere computerlesbar abgespeicherten Kennfeld die erforderliche Programmierungstemperatur in Abhängigkeit der angestrebten Schalttemperatur ausgelesen. Dabei können nicht definierte Zwischenwerte in bekannter Weise durch mathematische Interpolation ermittelt werden.

Es ist besonders bevorzugt vorgesehen, die Programmierungstemperatur T_{prog} aus einem Bereich von mindestens ± 20 K um die thermodynamische Phasenübergangstemperatur Tₜᵣₐₙₛ des mindestens einen Schaltsegments zu Wählen, insbesondere aus einem Bereich von Tᵣₐₙₛ ± 25 K, vorzugsweise aus einem Bereich von Tₜᵣₐₙₛ ± 30 K. Im Falle eines Formgedächtnispolymers, das zwei Schaltsegmente und damit zwei thermodynamische Phasenübergangstemperaturen Tₜᵣₐₙₛ,_{A} und T_{trans,B} aufweist, wird die Programmierungstemperatur T_{prog} aus einem Bereich von mindestens T_{trans,A} ±20 K bis T_{trans,B} ± 20 K gewählt, insbesondere aus einem Bereich von mindestens T_{trans,A} ± 25 K bis T_{trans,B} ± 25 K, besonders bevorzugt aus einem Bereich von mindestens T_{trans,A} ± 30 K bis Tₜᵣₐₙₛ,_{B} ± 30 K.

Das erfindungsgemäße Verfahren ermöglicht, ein individuelles Formgedächtnispolymer mehrfach nacheinander zu programmieren, wobei für die jeweiligen Programmierungszyklen unterschiedliche Programmierungstemperaturen (T_{prog}) angewendet und somit unterschiedliche Schalttemperaturen (T_{switch}, T_{σmax}) eingestellt (programmiert) werden. Dabei konnte nachgewiesen werden, dass die thermomechanische Vorgeschichte eines Formgedächtnispolymers ohne Auswirkung auf seine erneute Programmierung bleibt, das heißt der Zusammenhang zwischen Programmierungs- und Schalttemperatur unverändert bleibt.

Eine weitere vorteilhafte Ausführung der Erfindung sieht vor, dass das erfindungsgemäß Programmierungsverfahren für eine Mehrzahl von Formgedächtnispolymeren übereinstimmender Zusammensetzung durchgeführt wird, wobei für die einzelnen Formgedächtnispolymere jeweils unterschiedliche Programmierungstemperaturen (T_{prog}) angewendet und somit unterschiedliche Schalttemperaturen (T_{switch}, T_{σmax)} programmiert werden. Ergebnis dieser Vorgehensweise ist eine Serie von programmierten Polymeren (bzw. aus diesen Polymeren hergestellten Formkörpern), die in ihrer temporären Form vorliegen und trotz gleicher Chemie unterschiedliche Schalttemperaturen aufweisen.

Die Erfindung ist nicht auf bestimmte Formgedächtnismaterialien oder Formgebungen beschränkt. Beispielsweise kann als Formgedächtnispolymer ein nicht-poröses Material oder ein poröses, offen- oder geschlossenporiges Material eingesetzt werden.

Weitere vorteilhafte Ausgestaltungen der Erfindung sind Gegenstand er unabhängigen Ansprüche. Die Erfindung wird nachfolgend in Ausführungsbeispielen anhand der zugehörigen Figuren näher erläutert. Es zeigen:

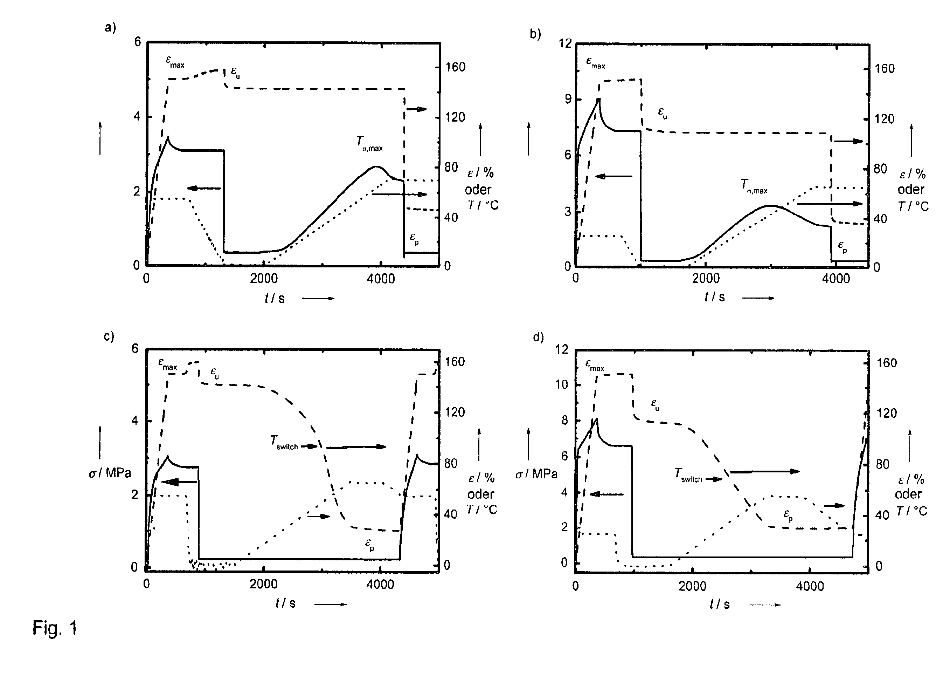

- Figur 1: Spannungs-Dehnungs-Kurven für ein PDLCL-Multiblockcopolymer (40 Gew.-% PPDL) während seiner Programmierung bei T_{prog} = 55 °C (Fig. 1a und 1c) und T_{prog} = 25 °C (Fig. 1 b und 1 d) und seiner Wiederherstellung unter Last (Fig. 1a und 1b) und lastfrei (Fig. 1c und 1d);

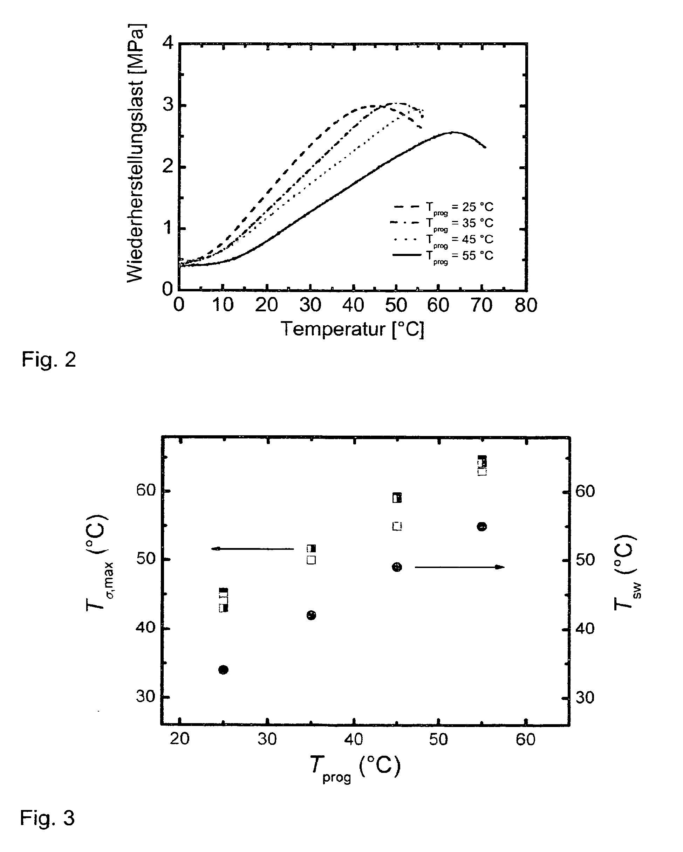

- Figur 2: Spannungs-Temperatur-Kurven für ein bei vier unterschiedlichen Programmierungstemperaturen programmiertes PDLCL-Multiblockcopolymer (50 Gew.-% PPDL) während seiner Wiederherstellung unter Last;
- Figur 3: Zusammenhang zwischen der Programmierungstemperatur T_{prog} und der bei der lastfreien Rückstellung ermittelten Schalttemperatur T_{σ,max} (quadratische Symbole) und der bei Rückstellung unter Last ermittelten Schalttemperatur T_{sw} (ausgefüllte Kreise) eines PDLCL-Multiblockcopolymers (50 Gew.-% PPDL), das in vier aufeinander folgenden Programmierungszyklen bei steigenden T_{prog} (vertikal halbgefüllte Quadrate) oder sinkenden T_{prog} (horizontal halbgefüllte Quadrate) oder in jeweils drei aufeinander folgenden Programmierungszyklen bei gleichen T_{prog} (offene Quadrate und ausgefüllte Kreise) programmiert wurde;

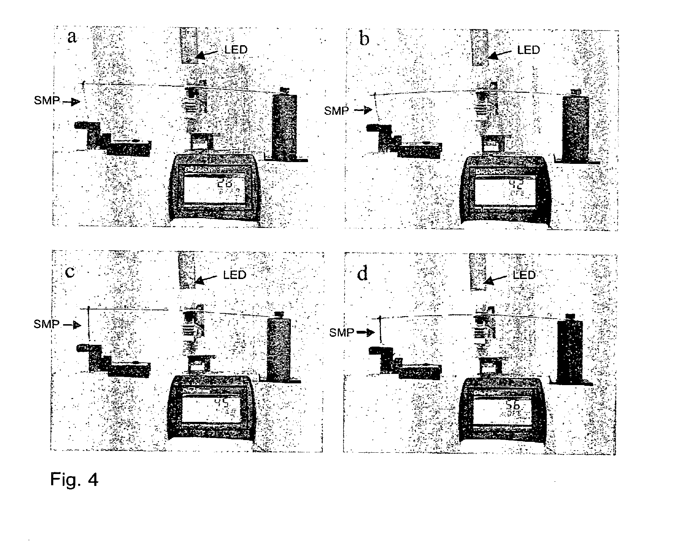

- Figur 4: Bilderserie eines Temperatursensor-Experiments mit einem Formgedächtnispolymer (PDLCL-Copolymer 40 Gew.-% PPDL) als thermo-sensitve Komponente, welche bei unterschiedlichen Temperaturen schaltbar ist (Fig. 4a und 4b: T_{prog =} 35°C; T_{switch} = 42°C; Fig. 4c und 4d: T_{prog} = 55 °C; T_{switch} = 56 °C);

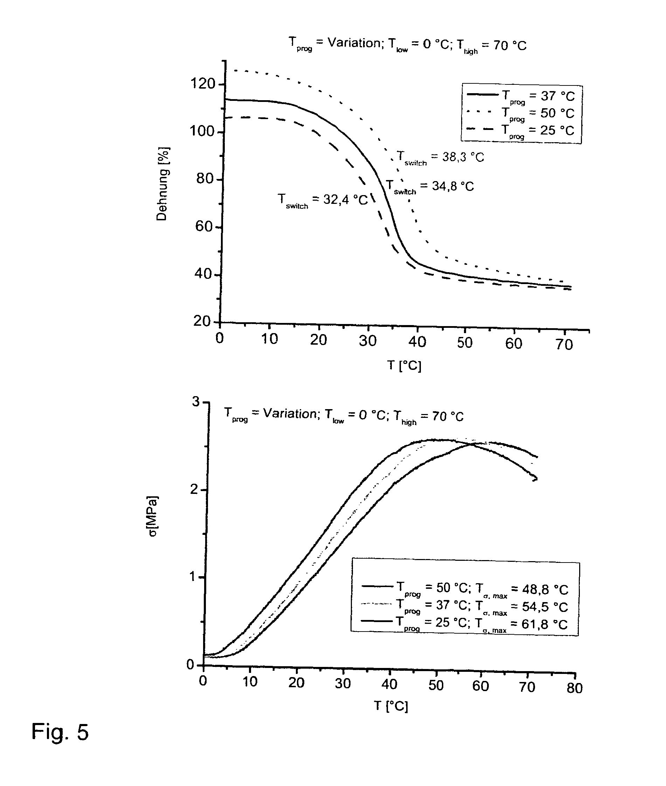

- Figur 5: Dehnungs-Temperatur-Kurven (oben) und Spannungs-Temperatur-Kurven (unten) für ein bei drei unterschiedlichen Programmierungstemperaturen programmiertes PDC-Multiblock-Copolymer mit teilkristallinen PCL-Schaltsegmenten während seiner lastfreien Wiederherstellung (oben) und Wiederherstellung unter Last (unten);

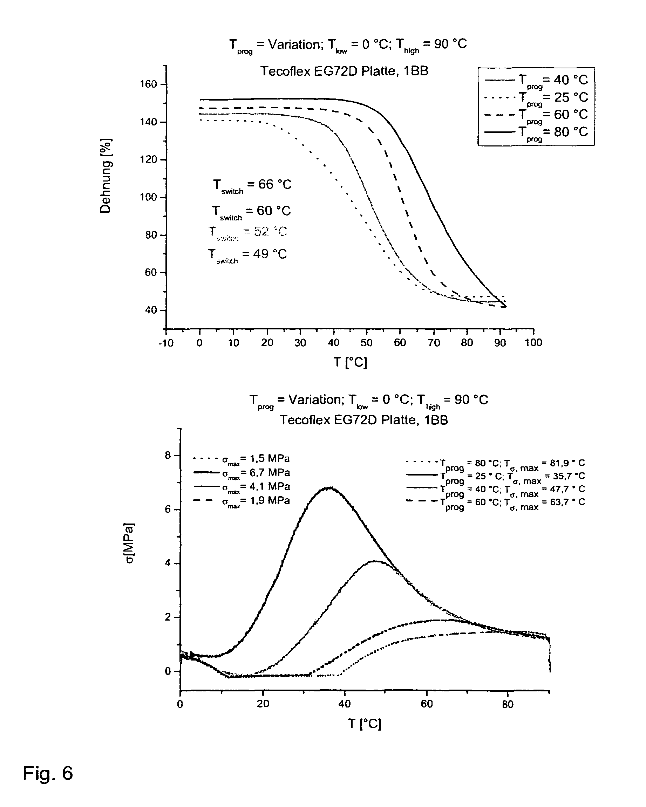

- Figur 6: Dehnungs-Temperatur-Kurven (oben) und Spannungs-Temperatur-Kurven (unten) für ein bei vier unterschiedlichen Programmierungstemperaturen programmiertes Tecflex®-Multiblock-Copolymer mit amorphen Schaltsegmenten während seiner lastfreien Wiederherstellung (oben) und Wiederherstellung unter Last (unten);

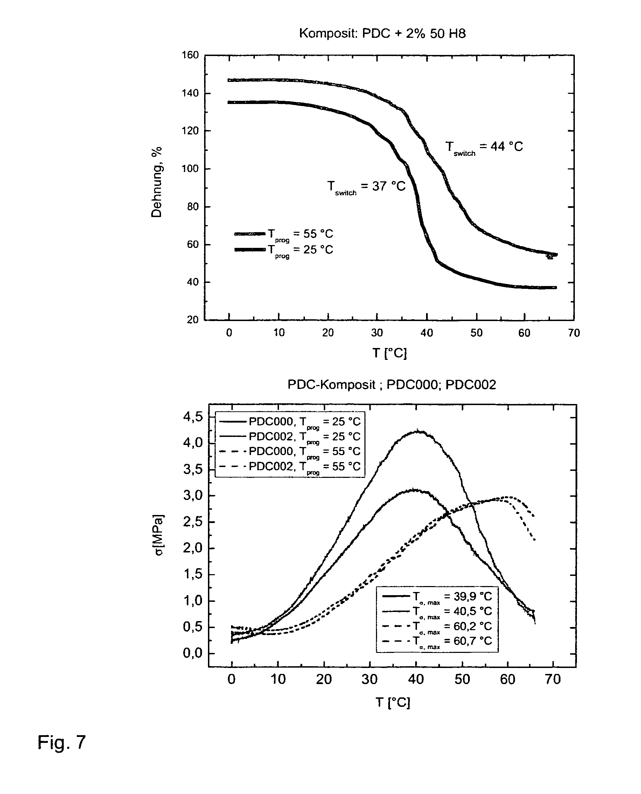

- Figur 7: Dehnungs-Temperatur-Kurven (oben) und Spannungs-Temperatur-Kurven (unten) für ein bei unterschiedlichen Programmierungstemperaturen programmiertes Formgedächtnis-Komposit (PDC-Multiblock-Coolymer mit teilkristallinen Schaltsegmenten und Fe-Nanopartikeln) während seiner lastfreien Wiederherstellung (oben) und Wiederherstellung unter Last (unten); und

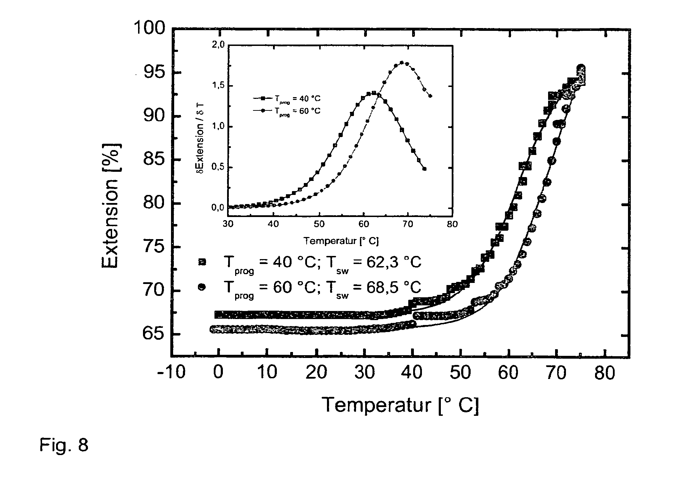

- Figur 8: Dehnungs-Temperatur-Kurven während der Rückstellung eines bei 40 °C und bei 60 °C programmierten Schaums aus PDLCL-Multiblockcopolymer (40 Gew.-% PPDL).

Formgedächtnispolymere sind in der Lage, neben ihrer aktuellen, temporären Form (A) eine weitere, permanente Form (B) zu speichern, welche sie nach Applikation eines externen Stimulus z.B. Temperaturerhöhung wieder einnehmen. Die vorliegende Erfindung bezieht sich auf Polymere (einschließlich deren Komposite), die einen thermisch induzierten Formgedächtniseffekt zeigen.

Formgedächtnispolymere besitzen die Fähigkeit, nach entsprechender thermomechanischer Behandlung eine definierte, temporär fixierte Form (A) einzunehmen und nach Erwärmung oberhalb der Schalttemperatur wieder in ihre ursprüngliche Gestalt (B) zurückzukehren. Die Formgedächtniskunststoffe, welche einen thermisch induzierten Formgedächtniseffekt zeigen, können sowohl kovalente Polymer-Netzwerke (z.B. Thermosets, Photosets), thermoplastische Elastomere (z.B. Multiblock Copolymere, Polyesterurethane) oder Blends (Polymermischungen) und Komposite der vorgenannten KunststoffKlassen sein.

Eine Formgedächtnisfunktionalität wird durch Kombination aus einer bestimmten molekularen Struktur der Polymere und einer thermomechanischen Konditionierung erhalten. In einem ersten klassischen Verarbeitungsschritt wird dabei zunächst die so genannte permanente Form des Polymers hergestellt. Anschließend erfolgt die Programmierung, d.h. die Herstellung der temporären, sichtbaren Gestalt. In einem typischen Formgedächtnisexperiment wird das Polymer dabei zunächst auf eine Temperatur T_{prog} > Tₜᵣₐₙₛ (Übergangstemperatur des Schaltsegments; Tₜᵣₐₙₛ = Tₘ oder T_{g}) erwärmt und bei dieser Temperatur in die temporäre Form überführt und unter Beibehaltung des Formzwangs auf eine Temperatur T < Tₜᵣₐₙₛ abgekühlt. In einem weiteren Arbeitsschritt erfolgt anschließend die Wiederherstellung der ursprünglichen permanenten Gestalt durch Erwärmung auf eine Temperatur (T_{high}) oberhalb von Tₜᵣₐₙₛ. Diese Wiederherstellung kann entweder spannungsfrei oder unter einer vorgegebenen Last erfolgen. Im Falle der spannungsfreien Wiederherstellung ergibt sich die charakteristische Schalttemperatur T_{switch} aus dem Wendepunkt der Dehnungs-Temperatur-Kurve (Lendlein & Kelch, Angew. Chem. Int. Ed. Engl. 2002, 41, 2034-2057). Im Falle der Rückstellung unter Last weist die Spannungs-Temperatur-Kurve ein charakteristisches Maximum (T_{σ,max}) auf (Gal et al., J. Biomed. Mater. Res., Part A 2005, 73, 339-348). T_{σ,max} resultiert aus zwei gegensätzlichen Prozessen bei Erwärmung, zum einen aus einem Anstieg der Kraft bei Temperaturerhöhung und zum anderen aus der zunehmenden Erweichung des Kunststoffs mit steigender Temperatur.

Neben der oben bereits vorgestellten typischen Programmierung oberhalb von Tₜᵣₐₙₛ wird im Stand der Technik weiterhin über das Verfahren der Kaltverstreckung (cold drawing) unterhalb von Tₜᵣₐₙₛ, zur Programmierung von Formgedächtnispolymeren und die entsprechenden Auswirkungen auf die Formgedächtniseigenschaften berichtet (z.B. Ping et al., Biomacromolecules 2005, 6, 587-592, 18-20; Mohr et al., PNAS 2006, 103, 3540-3545).

Ein Verfahren zur Erzeugung eines Temperaturgedächtnisses bei Formgedächtniskunststoffen ist bisher nicht beschrieben. Lediglich für metallische Formgedächtnislegierungen (SMA) und für Polymer-CNT-Komposite, die ihre Formgedächtniseigenschaft den Kohlenstofffasern verdanken, ist in der Literatur ein entsprechendes "temperature memory" Verhalten bekannt (s.o. Zheng et al. bzw. Miaudet et al.).

Die wesentliche Neuerung des hier beschriebenen Verfahrens zur Generierung eines Temperaturgedächtnisverhaltens von Formgedächtnispolymeren liegt in der Einführung eines neuen Parameters bei der Programmierung, der Programmierungstemperatur, die systematisch im Bereich von beispielsweise 50 K variiert wurde. Die Untersuchungen zum Temperaturgedächtnis wurden an verschiedenen Formgedächtniskunststoffen mit teilkristallinen oder amorphen Schaltsegmenten durchgeführt. Exemplarisch ist das zugrunde liegende Funktionsprinzip am Beispiel von linearen Multiblock-Copolymeren (PDLCL) [Beispiel 1] mit einem teilkristallinen Schaltsegment auf der Basis von Poly-ε-caprolacton (PCL) und einem ebenfalls teilkristallinen Hartsegment aus Poly-ω-decadolacton (PPDL) an Bulk-Prüfkörpern und an Schäumen [Beispiel 5] demonstriert. Darüber hinaus wurde das Temperaturgedächtnis von amorphen Formgedächtnispolymeren am Beispiel eines kommerziellen Polyetherurethans Tecoflex® (EG72D) [Beispiel 3] sowie für Formgedächtnispolymer-Composite auf der Basis eines Polyesterurethans PDC [Beispiel 4] mit teilkristallinem PCL-Schaltsegment und für Multiphasen-Polymernetzwerke mit zwei kristallinen Schaltsegmenten (PPDLT-co-PCLT) [Beispiel 6] gezeigt.

### Beispiel 1: PDLCL-Multiblockcopolymere mit teilkristallinem Schaltsegment

### Synthese:

Für die Experimente wurde eine Serie von PDLCL-Copolymeren mit unterschiedlichen Schaltsegmentanteilen synthetisiert. Die Synthese erfolgte durch Umsetzung der telechelen Macrodiole Poly-ε-caprolacton (Mₙ = 3.000 g/mol; Tₘ = 42 °C) und Poly-ω-decadolacton (Mₙ = 5.600 g/mol; Tₘ = 84 °C) mit 2,2(4),4-Trimethylhexandiisocyanat (TMDI). Die charakteristischen Daten zur Beschreibung der hergestellten Copolymere sind in Tabelle 1 aufgelistet. Für alle Multiblockcopolymere wurden zwei Schmelzübergänge und zwei Kristallisationsübergänge in DSC-Thermogrammen beobachtet, was die Gegenwart kristalliner PCL- und PPDL-Domänen zeigt. Die Peakmaximum-Temperatur der mittels dynamisch-mechanischer Thermoanalyse bei variablen Temperaturen bestimmten tanδ-Kurve (T_{δ,max}) belegt eine gemischte amorphe Phase. Das PDLCL-Multiblockcopolymer weist die folgende Struktur auf:

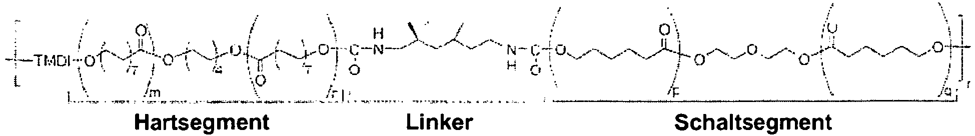

**Tabelle 1:**

| Sample ID^{*)} | PPDL (w%) | Mₙ (g•mol⁻¹) | *PD* | *T*_{*max,*δ} (°C) | T_{m.PCL} (°C) | T_{m.PPDL} (°C) | Δ*Hₘ* (J•g⁻¹) | Δ*H_{m.PPDL}* (J•g⁻¹) |
|---|---|---|---|---|---|---|---|---|
| PDLCL 100 | 100 | 55000 | 3.4 | - | - | 86 | 104 | 104 |
| PDLCL060 | 60 | 86000 | 3.3 | -22 | - | 82 | 103 | 92 |
| PDLCL050 | 50 | 59000 | 2.0 | -25 | 44 | 86 | 101 | 70 |
| PDLCL040 | 40 | 58000 | 2.2 | -33 | 43 | 82 | 92 | 53 |
| PDLCL030 | 30 | 116000 | 2.7 | -33 | 43 | 81 | 87 | 42 |

| | | | | | | | | |
|---|---|---|---|---|---|---|---|---|
| *) Die dreistellige Nummer gibt den Massenanteil von PPDL in Gew.-% (w%) an | | | | | | | | |

### Temperaturgedächtnis von PDLCL-Multiblockcopolymeren:

Zum Nachweis des Temperaturgedächtniseffekts der PDLCL-Formgedächtnispolymere wurden zyklische thermomechanische Experimente an Zugprüfkörpern (gemäß DIN EN ISO 1 BB) der Polymere in einer mit einer Thermokammer ausgestatteten Zugprüfapparatur (Fa. Zwick) durchgeführt.

Die durchgeführten Formgedächtnisexperimente gliederten sich dabei in ein Programmierungsverfahren zur Überführung der Prüfkörper in eine temporäre Form sowie das Auslösen des Formgedächtniseffekts zur Wiederherstellung der permanenten Form (Recovery). Die Untersuchung der Wiederherstellung erfolgte sowohl spannungsfrei als auch unter einer vorgegebenen Last. Für alle Experimente wurden drei aufeinander folgende Zyklen, jeweils den Programmierungs- und Wiederherstellungsabschnitt umfassend, durchgeführt.

Bei der Programmierung wurde jeder Prüfkörper zunächst auf die Programmierungstemperatur (T_{prog}, variabel) erwärmt und anschließend bei dieser Temperatur auf eine vorgegebene Dehnung (εₘ = 150%, konstanter Parameter) gedehnt. Im Anschluss erfolgte die Fixierung der temporären Form durch Abkühlen auf T_{low} =0 °C (konstanter Parameter) unter Beibehaltung des Formzwangs. Die wesentliche Neuerung im Schritt der Programmierung ist die Einführung eines neuen, variablen Parameters, der Programmierungstemperatur T_{prog}, und seiner systematischer Variation zur Erzielung einer vorbestimmten Schalttemperatur (T_{switch}, T_{σ,max}). Für die PDLCL-Copolymere wurden jeweils die Programmierungstemperaturen T_{prog} = 25 °C, 35 °C, 45 °C und 55 °C angewendet.

Der anschließende Recovery-Prozess zur Wiederherstellung der ursprünglichen permanenten Gestalt der Prüfkörper erfolgte durch Erwärmung auf die Rückstellungstemperatur T_{high} = 70°C (konstanter Parameter). Messgrößen waren dabei die sich infolge der gewählten Programmierungstemperatur T_{prog} einstellende Schalttemperatur T_{switch} bzw. T_{σ,max}. Im Falle der spannungsfreien Wiederherstellung (δ = 0 Mpa) ergibt sich die charakteristische Schalttemperatur T_{switch} aus dem Wendepunkt der Dehnungs-Temperatur-Kurve. Im Falle der Rückstellung unter Last weist die Spannungs-Temperatur-Kurve ein charakteristisches Maximum (T_{σ,max}) auf.

In Figur 1 sind die typischen Spannungs-Dehnungs-Temperatur-Kurven für die spannungsfreie Wiederherstellung (Figuren 1c und 1d) und die Wiederherstellung unter Last (Figuren 1 c und 1 d) am Beispiel des PDLCL-Copolymers mit 40% PPDL-Anteil für T_{prog} = 25 °C (Figuren 1b und 1d) und 55 °C (Figuren 1a und 1c) dargestellt. Die gepunkteten Linien zeigen jeweils den Temperaturverlauf laut vorgegebenem Temperaturregime, die gestrichelten Linien die prozentuale Dehnung (entweder als Formzwang auferlegt oder sich lastfrei in Abhängigkeit der Temperatur einstellend) und die durchgehenden Linien das gemessene Spannungsmodul σ. Der Programmierungsprozess findet in den Figuren jeweils zwischen 0 und etwa 1000 s statt und die Rückstellung in der anschließenden Phase durch graduelle Erwärmung auf T_{high}.

Alle durchgeführten Experimente zeigen eindrucksvoll, dass durch die Wahl der Programmierungstemperatur T_{prog} im Bereich von 25°C bis 55°C bei PDLCL-Copolymeren sowohl die Schalttemperatur T_{switch} bei der spannungsfreien Wiederherstellung als auch das charakteristische Maximum T_{σ,max} im Falle der Wiederherstellung unter Last unabhängig von der Zusammensetzung der Copolymere eingestellt werden kann. Die gemittelten Ergebnisse sind für sämtliche der hergestellten PDLCL-Copolymere für die beiden Programmierungstemperaturen T_{prog} = 25 °C und 55 °C in Tabelle 2 zusammengestellt. Es ist ersichtlich, dass mit steigender Programmierungstemperatur die Schalttemperatur T_{switch} im Bereich von 33 °C bis 56 °C und T_{σ,max} im Bereich von 44 °C bis 64 °C variiert.

Die untersuchten Formgedächtnispolymere zeigten dabei ausnahmslos gute Formgedächtniseigenschaften mit einer Fixierungsrate (R_{f}) im Bereich von 70 bis 75% für die niedrigste Programmierungstemperatur (T_{prog} = 25 °C) und 90 bis 100 % für T_{prog} = 55 °C jeweils durch Mittelung des 2. und 3. Zyklus bestimmt. Die Recoveryrate (Rᵣ) im 2. und 3. Zyklus (*Rᵣ (2 - 3)* ) lag für alle Copolymer-Kompositionen unabhängig von der gewählten Programmierungstemperatur im Bereich von 93 bis 98%.

**Tabelle 2:**

| Sample ID¹⁾ | *R*_{f}*(1)* (%) | *R̅*_{f} *(2-3)* (%) | *R̅*ᵣ *(1)* (%) | *R̅ᵣ (2-3)* (%) | *T_{switch}* (°C) | *T_{σ.max}* (°C) | **σ***ₘₐₓ* (MPa) |
|---|---|---|---|---|---|---|---|
| PDLCL060²⁾ | 90 | 89 | 65 | 96 | 55 | 64 | 3.1 |
| PDLCL050²⁾ | 93 | 93 | 74 | 97 | 56 | 63 | 2.6 |
| PDLCL040²⁾ | 93 | 93 | 81 | 98 | 54 | 64 | 2.7 |
| PDLCL030²⁾ | 101 | 101 | 80 | 98 | 54 | 61 | 2.3 |
| PDLCL060³⁾ | 75 | 70 | 79 | 96 | 33 | 44 | 2.7 |
| PDLCL050³⁾ | 77 | 70 | 82 | 96 | 36 | 44 | 3.0 |
| PDLCL040³⁾ | 73 | 71 | 82 | 93 | 34 | 45 | 3.4 |
| PDLCL030³⁾ | 75 | 75 | 76 | 97 | 39 | 44 | 3.0 |

| | | | | | | | |
|---|---|---|---|---|---|---|---|
| ¹⁾ Die dreistellige Nummer gibt den Massenanteil von PPDL in Gew.-% an ²⁾ Programmierung bei T_{prog} = 55 °C, Rückstellung bei T_{high} = 65 °C ³⁾ Programmierung bei T_{prog} = 25 °C, Rückstellung bei T_{high} = 65 °C | | | | | | | |

Am Beispiel des PDLCL-Copolymers mit 50 % PPDL-Anteil sind in Figur 2 die unterschiedlichen Spannungs-Temperatur-Kurven für die Programmierungstemperaturen 25 °C, 35 °C, 45°C und 55 °C gegenübergestellt (siehe auch Tabelle 3).

In ergänzenden Experimenten mit Wiederherstellung ohne Last wurde am Beispiel von PDLCL050 der Einfluss der thermomechanischen Vorgeschichte auf das Temperaturgedächtnis (T_{σ,max}) der Formgedächtnismaterialien untersucht. Dazu wurde während eines Experiments die Programmierungstemperatur bei vier aufeinander folgenden Zyklen systematisch verändert. In einem ersten Experiment wurde die Programmierungstemperatur T_{prog} systematisch mit ansteigender Zyklusnummer erhöht (Zyklus 1 = 25 °C, Zyklus 2 = 35 °C, Zyklus 3 = 45 °C, Zyklus 4 = 55 °C) und in einem zweiten Experiment die Auswirkung der systematischen Absenkung der Programmierungstemperatur während aufeinander folgenden Zyklen untersucht (Zyklus 1 = 55°C, Zyklus 2 = 45 °C, Zyklus 3 = 35°C, Zyklus 4 = 25°C).

Die Ergebnisse sind in Tabelle 3 und Figur 3 dargestellt. Bei allen Experimenten konnte unabhängig von der thermomechanischen Vorgeschichte eine lineare Korrelation zwischen der verwendeten Programmierungstemperatur und der resultierenden Schalttemperatur T_{σ,max} bzw. T_{switch} (T_{sw} in Figur 3) festgestellt werden. Dieses Ergebnis bestätigt eine universelle Anwendbarkeit des beschriebenen Verfahrens zur Erzeugung eines Temperatur-Gedächtnis-Effektes bei Formgedächtnispolymeren mit teilkristallinen Schaltsegmenten, die als Übergangstemperatur eine Schmelztemperatur aufweisen (Tₜᵣₐₙₛ = Tₘ).

**Tabelle 3:**

| T_{prog} / °C | T_{σmax} / °C | T_{σmax} / °C* | T_{σmax} / °C# | T_{switch} / °C |
|---|---|---|---|---|
| 55 | 63 | 64 | 65 | 55 |
| 45 | 55 | 59 | 59 | 49 |
| 35 | 50 | 52 | 52 | 42 |
| 25 | 44 | 43 | 45 | 34 |

| | | | | |
|---|---|---|---|---|
| * Systematische Anhebung der Programmierungstemperatur T_{prog} ^{#}Systematische Absenkung der Programmierungstemperatur T_{prog} | | | | |

Darüber hinaus wurde die "Haltbarkeit" des Temperaturgedächtnis untersucht, indem jeweils eine bei 25 °C und bei 55 °C programmierte Probe (PDLCL040) für 7, 14 und 28 Tage bei 10 °C aufbewahrt wurde, ehe die Rückstellung durch Erwärmung auf 70 °C ausgelöst wurde. Die Rückstellungstemperaturen wurden mit denen von unmittelbar vor der Rückstellung programmierten Proben verglichen. Weder die bei 25°C noch die bei 55 °C programmierten Proben zeigten ein Unterschied in ihrem Rückstellungsverhalten.

Zur Demonstration des Temperatur-Gedächtnis-Effektes von Formgedächtnispolymeren im Hinblick auf mögliche Anwendungen wurden weitere Experimente durchgeführt. Es wurde ein Versuchsaufbau entwickelt, in dem die programmierten Prüfkörper (siehe obige Beschreibung) als Temperatursensor fungieren und bei ihrer Rückstellung einen Schalter, welcher mit einer roten LED verbunden ist, auslösen. Dieses Experiment wurde mit zwei Prüfkörpern des Copolymers PDLCL040 durchgeführt, welche bei unterschiedlichen Programmierungstemperaturen (T_{prog} = 35 °C und T_{prog} = 55 °C) auf εₘ = 150% gedehnt und unter Aufrechterhaltung dieses Formzwangs abgekühlt wurden. In dem experimentellen Aufbau wurde zudem ein Thermoelement zur Verfolgung der Temperatur am Prüfkörper (Thermosensor) integriert, sodass während der anschließenden Erwärmung die Rückstellungstemperatur bei Übergang in die verkürzte permanente Form ermittelt werden konnte. Wie in Figur 4 dargestellt, schaltet der Thermosensor (SMP) bei unterschiedlichen Temperaturen in Abhängigkeit der zuvor gewählten Programmierungstemperatur. Für T_{prog} = 35°C beträgt die Schalttemperatur ca. 42 °C (Fig. 4a und 4b) und für T_{prog} = 55°C ca. 56°C (Fig. 4c und 4d). Dieses Experiment zeigt die Anwendbarkeit des erfindungsgemäßen Verfahrens zur Herstellung eines re-programmierbaren Überhitzungsschalters, der ohne Veränderung des Formgedächtnismaterials bei vorbestimmten variablen Temperaturen schaltet.

Eine weitere Anwendungsmöglichkeit des erfindungsgemäßen Programmierverfahrens betrifft intelligente medizinische Geräte, insbesondere Instrumente für minimal-invasive chirurgische Verfahren. Zu diesem Zweck wurde ein "intelligentes" Kabel aus PDLCL060 in einer um 90° gekrümmten permanenten Form hergestellt und anschließend bei T_{prog} = 37 °C und 55 °C in eine gerade temporäre Form überführt. Während die Rückstellung des bei 37 °C programmierten Kabels in die gekrümmte Form bereits bei Körpertemperatur erfolgte, konnte die Wiederherstellung der permanenten Form bei dem bei 55 °C programmierten Kabel erst oberhalb von 50 °C beobachtet werden (Ergebnisse nicht gezeigt). Auf diese Weise kann der Operateur durch gezielt Wahl der Programmierungstemperatur bestimmen, ob der programmierte Gegenstand bereits bei Implantation durch die Körpertemperatur den Formenübergang vollzieht oder erste nach aktiver Erwärmung geringfügig oberhalb der Körpertemperatur.

### Beispiel 2: PDC-Multiblock-Copolymer mit teilkristallinem Schaltsegment

Der Temperatur-Gedächtnis-Effekt wurde ferner für ein PDC-Multiblock-Copolymer mit einem Poly-ω-caprolacton Schaltsegment (Mₙ = 2.000 g/mol; Tₘ = 35 °C) und einem Poly-*p-*dioxanon Hartsegment (Mₙ = 4.500 g/mol; Tₘ = 89 °C) gezeigt. Die Formgedächtnisexperimente wurden analog zu den unter Beispiel 1 an PDLCL-Copolymeren beschriebenen Untersuchungen bei den Programmierungstemperaturen T_{prog} = 25 °C, T_{prog} = 37 °C und T_{prog} = 50 °C durchgeführt (Tabelle 4). Abbildung 5 zeigt die resultierenden Spannungs-Temperatur- und Dehnungs-Temperatur-Kurven. Auch diese Experimente bestätigen einen linearen Zusammenhang zwischen verwendeter Programmierungstemperatur und resultierender Schalttemperatur, d.h. den Temperatur-Gedächtnis-Effekt.

**Tabelle 4:**

| *T*_{prog} °C | *T*_{σmax} / | *T*_{switch} / °C |
|---|---|---|
| 25 | 48,8 | 32,4 |
| 37 | 54,5 | 34,8 |
| 50 | 61,8 | 38,8 |

### Beispiel 3: Tecoflex® EG72D , Multiblock Copolymer mit amorphen Schaltsegment

Am Beispiel des Polyetherurethans Tecoflex® [beschrieben in: Mohr et al., PNAS 2006, 103, 3540-3545] wurde der Temperatur-Gedächtnis-Effekt für ein Formgedächtnispolymer mit amorphem Schaltsegment mit einer Glasübergangstemperatur (Tg = 74 °C) nachgewiesen. Im entsprechenden Formgedächtnisexperiment wurde die Programmierungstemperatur in vier aufeinander folgenden Zyklen von 80 °C auf 60 °C, 40 °C und 25 °C abgesenkt. Die Parameter εₘ = 150%, T_{low}= 0 °C und T_{high}= 90 °C wurden nicht variiert. Analog zu den Beispielen 1 und 2 wurden auch für Tecoflex® beide Recovery-Module (spannungsfrei und unter Last) für die Rückstellung der ursprünglichen Form angewendet. Auch in diesen Experimenten konnte das Temperatur-Gedächtnis durch einen linearen Zusammenhang zwischen verwendeter Programmierungstemperatur T_{prog} und resultierender Schalttemperatur T_{switch} bzw. T_{σ,max} gezeigt werden (siehe Figur 6). Es zeigte sich zudem ein signifikanter Anstieg der resultierenden Kraft von 1,5 MPa (für Tp_{rog} = 80 °C) auf 6,7 MPa (für T_{prog} = 25 °C) während des Schaltvorgangs mit sinkender Programmierungstemperatur (Tabelle 5).

**Tabelle 5:**

| *T*_{prog} [°C] | *R*_{f} (1) > [%] | *R*ᵣ (1) [%] | *T*_{switch} [°C] | *T*_{σ,max} [°C] |
|---|---|---|---|---|
| 80 | 100 | 75 | 66 | 81,9 |
| 60 | 97 | 97 | 60 | 63,7 |
| 40 | 96 | 97 | 52 | 47,7 |
| 25 | 94 | 97 | 49 | 35,7 |

| | | | | |
|---|---|---|---|---|
| Wiederherstellung bei T_{high} = 90 °C | | | | |

### Beispiel 4: Komposite aus PDC-Multiblock-Copolymer mit teilkristallinem PCL-Schaltsegment und magnetischen Eisen-Nanopartikeln

Der Temperatur-Gedächtnis-Effekt wurde auch für Komposite unterschiedlicher Zusammensetzung (2 Gew.-%, 5 Gew.%, 10 Gew.-%) bestehend aus PDC mit einem Poly-ε-caprolacton-Schaltsegment (Mₙ = 2.000 g/mol; Tₘ = 35°C) und magnetischen Eisen-Nanopartikeln [beschrieben in: Yakacki et al., Biomaterials 2007, 28, 2255-2263] nachgewiesen. Die Formgedächtnisexperimente wurden analog zu den unter Beispiel 1 an PDLCL-Copolymeren beschriebenen Untersuchungen bei den Programmierungstemperaturen T_{prog} = 25 °C, und T_{prog} = 55 °C durchgeführt (εₘ = 150%, T_{low}= 0 °C, T_{high} = 65 °C für alle Experimente konstant).
In allen Experimenten waren die beobachteten Schalttemperaturen unabhängig von der Zusammensetzung der Komposite. Für T_{prog} = 25 °C betrug die resultierende Schaltemperatur T_{switch} ca. 37 °C und T_{σ,max} zwischen 38 °C und 40 °C. Bei T_{prog} = 55 °C konnte wie erwartet eine entsprechend höhere Schalttemperatur T_{switch} von ca. 42 °C und T_{σ},ₘₐₓ von zwischen 57 °C und 60 °C beobachtet werden (siehe Abb. 7 und Tabelle 6).

Diese Experimente verdeutlichen, dass das beschriebene Verfahren zur Erzeugung des Temperatur-Gedächtnisses auch bei Formgedächtnispolymer-Kompositen wirksam ist. Der entscheidende Vorteil solcher Komposite liegt wiederum darin, dass sie berührungslos von der temporären Form (A) in die ursprüngliche Form (B) überführt werden können.

**Tabelle 6:**

| Sample ID^{[a]} | *Nanoparticle -Content* [wt%]* | *T*_{switch} [°C] | *T*_{σ.max} [°C] | σₘₐₓ [MPa] | Sample ID^{[a]} | *T*_{switch} [°C] | *T*_{σ.max} [°C] | σₘₐₓ [MPa] |
|---|---|---|---|---|---|---|---|---|
| PDC000^{[b]} | 0 | 37,6 | 39,9 | 3,1 | PDC000^{[c]} | 42,5 | 60,2 | 3,0 |
| PDC002^{[b]} | 1,7 | 37,0 | 40,5 | 4,2 | PDC002^{[c]} | 43,1 | 60,7 | 2,6 |
| PDC005^{[b]} | 4,2 | 38,2 | 38,6 | 3,7 | PDC005^{[c]} | 42,1 | 57,7 | 2,4 |
| PDC010^{[b]} | 9,3 | 37,8 | 38,3 | 3,8 | PDC010^{[c]} | 41,6 | 57,2 | 2,9 |

| | | | | | | | | |
|---|---|---|---|---|---|---|---|---|
| ^{[a]} Die dreistellige Nummer gibt den Massenanteil der Nanopartikel im Komposit in Gew.-% an. ^{[b]} Programmierung bei T_{prog} = 55 °C, Rückstellung bei T_{high} = 65 °C. ^{[c]} Programmierung bei T_{prog} = 25 °C, Rückstellung bei T_{high} = 65 °C. * Bestimmt durch TGA-Messungen. | | | | | | | | |

### Beispiel 5: Schäume aus PDLCL-Multiblockcopolymeren

### Synthese:

Die Herstellung der PDLCL-Schäume erfolgte nach dem Pressure-Quensch-Verfahren unter Verwendung von überkritischem CO₂ (siehe Singh et al., Biomaterials 2004. 25, 2611-2617 oder Weigel et al., Expert Rev. Med. Devices 2006, 3 (6), 835-851). Es wurde ein Multiblockcopolymer mit 40 % PPDL-Anteil gemäß Beispiel 1 verwendet (Mn = 100.000 g/mol). Die Synthese erfolgte durch Umsetzung der telechelen Macrodiole Poly-ε-caprolacton (Mₙ = 3.000 g/mol; Tₘ = 48 °C) und Poly-ω-decadolacton (Mₙ = 4.300 g/mol; Tₘ = 89 °C) mit 1,6 Hexamethylendiisocyanat (HDI) in Dimethylcarbonat bei 85°C für 72 h. Die Charakterisierung des Scaffolds mittels Rasterelektronenmikroskopie (REM) zeigt sowohl geschlossenporige als auch offenporige Strukturen des PDLCL-Schaums. Der Anteil an geschlossenporigen Strukturen betrug ca. 50 %. Die Porosität des Schaums lag bei etwa 90 % (Dichte = 0,1 g/mol).

### Temperaturgedächtnis von PDLCL-Schäumen:

Die durchgeführten Formgedächtnisexperimente gliederten sich dabei wieder in ein Programmierungsverfahren und die Wiederherstellung bzw. das Auslösen des Temperatur- und Formgedächtniseffekts. Die Untersuchung der Wiederherstellung erfolgte nahezu spannungsfrei. Bei der Programmierung wurde der Prüfkörper zunächst auf die Programmierungstemperatur T_{prog} erwärmt und anschließend bei dieser Temperatur auf eine vorgegebene Extension (εₘ = 50%, konstanter Parameter) komprimiert. Eine Extension von 100 % entsprach dabei der Ausgangslänge des würfelförmigen Scaffolds. Im Anschluss erfolgte die Fixierung der temporären Form durch Abkühlen auf T_{low} = 0 °C (konstanter Parameter). Der anschließende Recovery-Prozess zur Wiederherstellung der ursprünglichen permanenten Gestalt des Prüfkörpers erfolgte durch Erwärmung auf T_{high} = 75 °C (konstanter Parameter). Messgrößen waren dabei die Schalttemperatur T_{switch} sowie das Temperaturintervall ΔT_{rec}, in dem die Rückstellung stattfand. Im Unterschied zu den TME-Experimenten an Bulk-Materialien (Beispiele 1-4) wurde bei den Schäumen aufgrund ihrer geringeren Wärmeleitfähigkeit eine niedrigere Heizrate von 1 K/min verwendet. Im durchgeführten TME-Experiment wurde T_{prog} in drei aufeinander folgenden Zyklen variiert (Zyklus 1: T_{prog} = 60 °C; Zyklus 2: T_{prog} = 40 °C; Zyklus 3: T_{prog} = 60°C). In Figur 8 sind die Extensions-Temperatur-Kurven der spannungsfreien Wiederherstellung für die Zyklen 1 und 2 dargestellt sowie eingeblendet die erste Ableitung der angepassten Kurven zur Bestimmung von T_{switch}.
Dieses Experiment demonstriert eindrucksvoll am Beispiel von PDLCL-Scaffolds, dass das Verfahren zur Generierung eines Temperaturgedächtniseffekts auch für schaumartige Formkörper funktioniert. Für T_{prog} = 40°C betrug die resultierende Schaltemperatur T_{switch} = 62,3 °C und bei T_{prog} = 60 °C konnte eine entsprechend höhere Schalttemperatur T_{switch} = 68,5 °C in Zyklus 1 und Zyklus 3 beobachtet werden. Ebenso wie bereits im Beispiel 1 (PDLCL) konnte auch für die PDLCL-Schäume eine nahezu lineare Korrelation zwischen der verwendeten T_{prog} und der resultierenden T_{switch} gezeigt werden, welche unabhängig von der thermomechanischen Vorgeschichte ist. Im Vergleich zu den Ergebnissen der Bulk-Werkstoffe (Beispiel 1) liegen die beobachteten Schalttemperaturen um ca. 10 K höher, was auf die geringere Wärmeleitfähigkeit der porösen Schäume zurückzuführen ist.

### Beispiel 6: PPDLT-co-PCLT-Multipasen-Polymernetzwerke mit zwei kristallinen Schaltsegmenten

Der unter Anwendung des erfindungsgemäßen Verfahrens zugängliche Schaltbereich ist in den PDLCL-Multiblockcopolymeren nach Beispiel 1 durch den Bereich der Schmelztemperatur Tₘ der PCL-Kristallite beschränkt. Um diesen Temperaturgedächtnisbereich zu erweitern, wurden kovalente Netzpunkte in die Polymere eingeführt, welche die permanente Form anstelle der PPDL-Kristallite fixieren sollten. Auf diese Weise sollten die PPDL-Kristallite ihrerseits als zusätzliche Schaltsegmente in den PDLCL-Thermoplasten verfügbar sein.

### Synthese:

Zu diesem Zweck wurde eine Reihe von Mulitphasen-Polymernetzwerken (PPDLT-co-PCLT) durch Co-Kondensation von sternförmigen hydroxy-telechelischen Oligo(ω̅-penta-decalacton)triol (OPDLT, Mₙ = 4000 g·mol⁻¹) und Oligo(ε-caprolacton)tetraol (OCLT(4), Mₘ = 4000 g·mol⁻¹ oder OCLT(8), Mₙ = 8000 g·mol⁻¹) mit 2,2(4),4-Trimethylhexandiisocyanat (TMDI).
In der Ringöffnungspolymerisation wurde OCL-Triol (Mₙ = 300 g·mol⁻¹) als dreiarmiger Initiator für die PPDLT-Synthese und Pentaerythrit als vierarmiger Initiator für die PCLT-Synthese eingesetzt. Für die herstellung der sternförmigen Precursor wurde das stöchiometrische Monomer/Initiator-Verhältnis so eingestellt, dass ein PPDLT- und ein PCLT-Precursor mit Mₙ von etwa 4000 g·mol⁻¹ erhalten wurden. Die Synthese der Precursor wurde im Bulk-Ansatz unter Stickstoffatmosphäre bei 130 °C durchgeführt (Details in: Alteheld et al., Angew. Chem. Int. Ed. 2005 (44), 1188ff). PCLT(8) mit Mₙ = 8000 g·mol⁻¹ wurde kommerziell erworben (Solvay Caprolactones). Die Synthese der Polymernetzwerke wurde in Lösung durchgeführt. Hierfür wurden die hydroxy-telechelischen Precursor in Dichlorethan gelöst und unter Stickstoffatmosphäre gemischt. Eine definierte Menge TMDI wurde unter Raumtemperatur unter Rühren zugefügt. Nach weiterem Rühren für 5 Minuten wurde die Mischung in Teflon-Geschirr gegossen und unter Stickstoffstrom für 24 h bei 60 °C gehalten, um das Lösungsmittel unter Bildung des Polymers gründlich zu verdampfen. Zur Vernetzung wurden die Filme bei 80 °C unter Unterdruck für 4 Tage gehalten. Nach der Polymerisation wurden die Proben mit Chloroform extrahiert, um nicht umgesetzte Substanzen zu entfernen.

Alle so hergestellten Mulitphasen-Polymernetzwerke wiesen hohe Gelanteile zwischen 92 und 94 % auf, was auf eine nahezu vollständige Inkorporation der Precursor in das Polymernetzwerk hinweist. In DSC-Thermogrammen wurden zwei separate Schmelzübergänge beobachtet, welche den kristallinen PCL- und PPDL-Domänen zugeordnet werden konnten.

### Temperaturgedächtnis der PPDLT-co-PCL-Multiphasen-Polymernetzwerke:

Die Temperaturgedächtniseigenschaften der Multiphasen-Polymernetzwerke wurden wiederum in zyklischen thermomechanischen Versuchen untersucht, die eine thermomechanische Programmierung (εₘ = 150 %, T_{low} = 0 °C und T_{high} = 115°C) sowie eine anschließende Wiederherstellung der permanenten Form unter lastfreien Bedingungen (σ = 0 MPa), wobei T_{prog} in aufeinander folgenden Zyklen von 30 °C auf 60 °C auf 90 °C variiert wurde. Sämtliche Polymernetzwerksysteme zeigten Werte für R_{f} im Bereich von 97 bis 100 %, während die Werte für R_{f} mit steigender Programmierungstemperatur T_{prog} von 81 % (T_{prog} = 30 °C) auf 99 % (T_{prog} = 90 °C) zunahmen.
T_{switch} konnte durch Variation von T_{prog} präzise innerhalb der Temperaturintervalle von beiden Schmelzübergängen unabhängig von der Netzwerkzusammensetzung gesteuert werden mit Schalttemperaturen von T_{switch} = 29 °C (T_{prog} = 30 °C), T_{switch} = 59 °C (T_{prog}= 60 °C) und T_{switch} = 75-81 °C (T_{prog} = 90 °C). Im Gegensatz zu den thermoplastischen Multiblockcopolymeren aus Beispiel 1 wurde für die Multiphasen-Polymernetzwerke eine Abnahme des Rückstelltemperaturintervalls Δ T_{rec} von 40 auf 15 K mit steigendem T_{prog} beobachtet, was durch die Beiträge von beiden isomorphen kristallinen PPDL- und PCL-Domänen während der thermomechanischen Programmierung zu erklären sein könnte.

## Patentansprüche

1. Verfahren zur Programmierung eines Formgedächtnispolymers oder eines Kompositmaterials eines solchen, das mindestens ein Schaltsegment mit mindestens einem thermischen Phasenübergang sowie kovalente und/oder nicht-kovalente Vernetzungspunkte aufweist, so dass das Formgedächtnispolymer nach seiner Programmierung in der Lage ist, nach einer Temperatursteigerung auf eine Temperatur (T_{high}), die mindestens einer Schalttemperatur (T_{switch}, T_{σmax}) des Polymers entspricht, von einer programmierten temporären Form (A) in seine permanente Form (B) überzugehen,
wobei die Programmierung die Schritte aufweist:
(a) Vorbestimmung einer Programmierungstemperatur (T_{prog}) in Abhängigkeit von einer gewünschten Schalttemperatur (T_{switch,} T_{σmax}), wobei die Vorbestimmung
- rechnerisch unter Anwendung eines empirisch ermittelten mathematischen Zusammenhangs zwischen der Programmierungstemperatur (T_{prog}) und der Schalttemperatur (T_{switch}, T_{σmax)} oder
- unter Verwendung eines empirisch ermittelten Kennfeldes, enthaltend Parameterpaare aus Programmierungstemperatur (T_{prog}) und Schalttemperatur (T_{switch}, T_{σmax})
erfolgt,
(b) Erwärmung des Formgedächtnispolymers auf die vorbestimmte Programmierungstemperatur (T_{prog}) und Überführung des Polymers in eine der temporären Form entsprechende Form durch Anwendung eines Formzwangs und
(c) Abkühlen des Polymers auf eine Temperatur unterhalb der gewünschten Schalttemperatur (T_{switch}, T_{σmax}) unter Aufrechterhaltung des Formzwangs,
wobei sich die Schalttemperatur T_{switch} bei lastfreier Rückstellung aus dem Wendepunkt der Dehnungs-Temperatur-Kurve ergibt, und die Schalttemperatur T_{σmax} im Falle einer Wiedererwärmung unter einer auferlegten Last, d.h. bei konstanter Form, dem Maximum der Spannungs-Temperatur-Kurve entspricht.

2. Verfahren nach Anspruch 1, **dadurch gekennzeichnet, dass** das Verfahren zur Programmierung für ein gegebenes Formgedächtnispolymer mehrfach nacheinander durchgeführt wird, wobei für die jeweiligen Programmierungszyklen unterschiedliche Programmierungstemperaturen (T_{prog}) angewendet und somit unterschiedliche Schalttemperaturen (T_{switch}, T_{σmax}) programmiert werden.

3. Verfahren nach einem der vorhergehenden Ansprüche, **dadurch gekennzeichnet, dass** das Verfahren zur Programmierung für eine Mehrzahl von Formgedächtnispoly-meren identischer Zusammensetzung durchgeführt wird, wobei für die einzelnen Formgedächtnispolymere jeweils unterschiedliche Programmierungstemperaturen (T_{prog}) angewendet und somit unterschiedliche Schalttemperaturen (T_{switch}, T_{σmax}) programmiert werden.

4. Verfahren nach einem der vorhergehenden Ansprüche, **dadurch gekennzeichnet, dass** das Schaltsegment des Formgedächtnispolymers ein teilkristallines Segment mit einem Schmelzübergang (Tₘ) oder ein amorphes Segment mit einem Glasübergang (T_{g}) ist.

5. Verfahren nach einem der vorhergehenden Ansprüche, **dadurch gekennzeichnet, dass** die Programmierungstemperatur T_{prog} aus einem Bereich von mindestens ± 20 K um die thermodynamische Phasenübergangstemperatur Tᵣₐₙₛ des mindestens einen Schaltsegments gewählt wird.

6. Verfahren nach einem der vorhergehenden Ansprüche, **dadurch gekennzeichnet, dass** bei einem Formgedächtnispolymers, das zwei Schaltsegmente und zwei thermodynamische Phasenübergangstemperaturen T_{trans,A} und T_{trans,B} aufweist, die Programmierungstemperatur T_{prog} aus einem Bereich von mindestens T_{trans, A} ± 20 K bis T_{trans,A} + 20 K gewählt wird.

7. Verfahren nach einem der vorhergehenden Ansprüche, **dadurch gekennzeichnet, dass** als Formgedächtnispolymer ein nicht-poröses Material oder ein poröses, offen- oder geschlossenporiges Material eingesetzt wird.

## Claims

1. A method for programming a shape memory polymer or a composite material of such a polymer, which has at least one switching segment with at least one thermal phase transition and covalent and/or non-covalent crosslinking points, so that, after its programming, the shape memory polymer is capable of undergoing a transition from a programmed temporary shape (A) to its permanent shape (B) after a temperature increase to a temperature (T_{high}) which corresponds at least to a switching temperature (T_{switch}, T_{σmax}) of the polymer, the programming comprising the following steps:
(a) predetermination of a programming temperature (T_{prog}) as a function of a desired switching temperature (T_{switch}, T_{σmax}), wherein the predetermination is effected
- computationally with the use of an empirically determined mathematical relationship between the programming temperature (T_{prog}) and the switching temperature (T_{switch}, T_{σmax})
or
- with the use of an empirically determined characteristic diagram containing parameter pairs comprising programming temperature (T_{prog}) and switching temperature (T_{switch}, T_{σmax}).
(b) heating of the shape memory polymer to the predetermined programming temperature (T_{prog}) and transformation of the polymer into a shape corresponding to the temporary shape by use of forced shaping and
(c) cooling the polymer to a temperature below the desired switching temperature (T_{switch,} T_{σmax}) while maintaining the forced shaping, the switching temperature T_{switch} being derived from the point of inflection of the strain-temperature curve in the case of recovery in the absence of a load, and the switching temperature T_{σmax} corresponds to the maximum of the stress-temperature curve in the case of reheating under an applied load, i.e. in the case of constant shape.

2. The method according to claim 1, **characterized in that** the method for programming is carried out several times in succession for a given shape memory polymer, wherein different programming temperatures (T_{prog}) being used for the respective programming cycles and hence different switching temperatures (T_{switch}, T_{σmax}) being programmed.

3. The method according to any one of the previous claims, **characterized in that in that** the method for programming is carried out for a plurality of shape memory polymers of identical composition, wherein different programming temperatures (T_{prog}) being applied for the individual shape memory polymers and hence different switching temperatures (T_{switch}, T_{σmax}) being programmed.

4. The method according to any one of the previous claims, **characterized in that** the switching segment of the shape memory polymer is a semicrystalline segment having a melt transition (Tₘ) or is an amorphous segment having a glass transition (Tg).

5. The method according to any one of the previous claims, **characterized in that** the programming temperature T_{prog} is selected from a range of at least ± 20 K around the thermodynamic phase transition temperature Tₜᵣₐₙₛ of the at least one switching segment.

6. The method according to any one of the previous claims, **characterized in that**, in the case of a shape memory polymer which has two switching segments and two thermodynamic phase transition temperatures T_{trans,A} and T_{trans,B,} the programming temperature T_{prog} is selected from a range from at least T_{trans,A} ± 20 K to T_{tran,B} ± 20 K.

7. The method according to any one of the previous claims, **characterized in that** a nonporous material or a porous, open-pore or closed-pore material is used as a shape memory polymer.

## Revendications

1. Procédé de programmation d'un polymère à mémoire de forme ou d'un matériau composite d'un tel polymère qui présente au moins un segment de déclenchement avec au moins une transition de phase thermique ainsi que des points de réticulation covalents et/ou non covalents, de telle sorte que, après sa programmation, le polymère à mémoire de forme est en mesure, après une augmentation de température jusqu'à une température (T_{high}) qui correspond au moins à une température de déclenchement (T_{switch}, T_{σmax}) du polymère, de passer d'une forme temporaire (A) programmée à sa forme permanente (B), la programmation présentant les étapes suivantes :
(a) prédéfinition d'une température de programmation (T_{prog}) en fonction d'une température de déclenchement (T_{switch}, T_{σmax}) souhaitée, la prédéfinition s'effectuant
- par le calcul, avec utilisation d'un lien mathématique, déterminé empiriquement, entre la température de programmation (T_{prog}) et la température de déclenchement (T_{switch}, T_{σmax}) ou
- avec utilisation d'un champ caractéristique déterminé empiriquement, contenant des paires de paramètres issues de la température de programmation (T_{prog}) et de la température de déclenchement (T_{switch}, T_{σmax}),
(b) chauffage du polymère à mémoire de forme à la température de programmation (T_{prog}) prédéfinie et transformation du polymère en une forme correspondant à la forme temporaire par utilisation d'une contrainte de forme, et
(c) refroidissement du polymère jusqu'à une température inférieure à la température de déclenchement (T_{switch}, T_{σmax}) souhaitée avec maintien de la contrainte de forme, la température de déclenchement T_{switch} résultant, pour un rappel exempt de charge, du point d'inflexion de la courbe allongement-température, et la température de déclenchement T_{σmax} correspondant, en cas de nouveau chauffage sous une contrainte appliquée, c'est-à-dire pour une forme constante, au maximum de la courbe tension-température.

2. Procédé selon la revendication 1, **caractérisé en ce que** le procédé de programmation pour un polymère à mémoire de forme donné est effectué plusieurs fois de suite, différentes températures de programmation (T_{prog}) étant utilisées pour les cycles de programmation respectifs, et donc différentes température de déclenchement (T_{switch}, T_{σmax}) étant programmées.

3. Procédé selon une des revendications précédentes, **caractérisé en ce que** le procédé de programmation est effectué pour une multiplicité de polymères à mémoire de forme de composition identique, différentes températures de programmation (T_{prog}) étant respectivement utilisées pour les polymères à mémoire de forme individuels, et donc différentes températures de déclenchement (T_{switch}, T_{σmax}) étant programmées.

4. Procédé selon une des revendications précédentes, **caractérisé en ce que** le segment de déclenchement du polymère à mémoire de forme est un segment partiellement cristallin avec une transition de fusion (Tₘ) ou un segment amorphe avec une transition vitreuse (Tg).

5. Procédé selon une des revendications précédentes, **caractérisé en ce que** la température de programmation T_{prog} est choisie dans une plage d'au moins ± 20 K autour de la température de transition de phase Tₜᵣₐₙₛ thermodynamique du segment de déclenchement au moins au nombre de un.

6. Procédé selon une des revendications précédentes, **caractérisé en ce que**, dans le cas d'un polymère à mémoire de forme qui présente deux segments de déclenchement et deux températures de transition de phase thermodynamique T_{transA} et T_{transA}, la température de programmation T_{prog} est choisie dans une plage d'au moins T_{transA} ± 20 K à T_{transB} ± 20 K.

7. Procédé selon une des revendications précédentes, **caractérisé en ce que**, en tant que polymère à mémoire de forme, il est utilisé un matériau non poreux ou un matériau poreux à pores ouverts ou à pores fermés.
